(19) **Europäisches Patentamt**
**European Patent Office**
**Office européen des brevets**

(11) **EP 2 140 736 B1**

(12) **EUROPÄISCHE PATENTSCHRIFT**

(45) Veröffentlichungstag und Bekanntmachung des Hinweises auf die Patenterteilung:
**26.01.2011 Patentblatt 2011/04**

(21) Anmeldenummer: **07726793.8**

(22) Anmeldetag: **12.03.2007**

(51) Int Cl.:
**H05B 41/28** *(2006.01)*

(86) Internationale Anmeldenummer:
**PCT/EP2007/052282**

(87) Internationale Veröffentlichungsnummer:
**WO 2008/110204 (18.09.2008 Gazette 2008/38)**

(54) **SCHALTUNGSANORDNUNG UND VERFAHREN ZUM BETREIBEN EINER ENTLADUNGSLAMPE**

CIRCUIT ARRANGEMENT AND METHOD FOR OPERATING A DISCHARGE LAMP

CIRCUITERIE ET PROCÉDÉ D'UTILISATION D'UNE LAMPE À DÉCHARGE

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**06.01.2010 Patentblatt 2010/01**

(73) Patentinhaber: **Osram Gesellschaft mit beschränkter Haftung**
**81543 München (DE)**

(72) Erfinder:
- **KYRBERG, Karl**
  **81371 München (DE)**
- **SCHALLMOSER, Oskar**
  **85521 Ottobrunn (DE)**

(56) Entgegenhaltungen:
**DE-A1- 10 011 484     DE-A1- 19 839 329**

**Beschreibung**

Technisches Gebiet

Die vorliegende Erfindung betrifft eine Schaltungsanordnung zum Betreiben einer Entladungslampe mit einer dielektrischen Schicht zwischen zumindest einer Elektrode und einem Entladungsmedium mit einem Primärkreis, der einen Flusswandler mit mindestens einem elektronischen Schalter umfasst, wobei der Flusswandler einen ersten und einen zweiten Eingangsanschluss zum Anschließen einer Eingangsspannung aufweist, einem Sekundärkreis, der einen ersten und einen zweiten Ausgangsanschluss zum Anschließen der Entladungslampe aufweist, und einen den Primärkreis mit dem Sekundärkreis verbindenden Transformator, wobei der Transformator mindestens eine Primärwicklung, eine Sekundärwicklung und einen Transformatorkern aufweist, auf dem die Primärwicklung und die Sekundärwicklung gewickelt sind. Sie betrifft überdies ein Verfahren zum Betreiben einer Entladungslampe mit einer dielektrischen Schicht zwischen zumindest einer Elektrode und einem Entladungsmedium an einer derartigen Schaltungsanordnung.

Stand der Technik

Eine derartige Schaltungsanordnung und ein derartiges Verfahren sind bekannt aus der DE 100 11 484 A1 sowie der DE 198 39 329 A1. In dem zuerst genannten Dokument aus dem Stand der Technik wird bereits darauf hingewiesen, dass ein reduziertes Bauvolumen und -gewicht einer derartigen Schaltungsanordnung, wobei diese Größen im Wesentlichen durch den Transformator bedingt sind, sehr erstrebenswert sind. Weiterhin wird in der erstgenannten Anmeldung bereits die Problematik der Verluste im Transformatorkern angesprochen, die sich durch eine unerwünschte Erwärmung des Transformators äußern.

Darstellung der Erfindung

Die Aufgabe der vorliegenden Erfindung besteht deshalb darin, eine gattungsgemäße Schaltungsanordnung bzw. ein gattungsgemäßes Verfahren derart weiterzubilden, dass bei geringem Bauvolumen und -gewicht eine Reduktion der Verlustleistung ermöglicht wird.

Diese Aufgabe wird gelöst durch eine Schaltungsanordnung mit den Merkmalen von Patentanspruch 1 sowie durch ein Verfahren mit den Merkmalen von Patentanspruch 12.

Die vorliegende Erfindung basiert auf der Erkenntnis, dass die in Wärme umgesetzten Verluste im Stand der Technik im Wesentlichen aus der Sättigung des Transformators herrühren. Geringere Verluste könnten dann erzielt werden, wenn ein Kernmaterial mit einer steileren Hysteresekurve gewählt würde. Ein derartiges Material ist jedoch teuer, so dass ein unmittelbares Ersetzen des vorhandenen Transformatorkerns durch einen Kern aus einem Material mit einer steileren Hysteresekurve nicht in Betracht kommt. Die Erfindung geht nun den Weg, dass parallel zur Sekundärwicklung eine diskrete Induktivität mit einem Kern angeordnet wird. Da auf dem Kern dieser diskreten Induktivität keine zwei galvanisch getrennten Wicklungen - wie beim Transformator - gewickelt werden müssen, ist eine reduzierte Isolierung der Wicklungen auf dem Kern dieser diskreten Induktivität ermöglicht. Insbesondere kann bei einer Induktivität bei gegebener Kerngröße mehr Kupfervolumen aufgebracht werden als bei einem Transformator. Dadurch kann dieselbe Spannung-Zeit-Fläche wie beim Transformator durch ein geringeres Kernvolumen erzielt werden. Dadurch muss nur der Kern der diskreten Induktivität aus einem hochwertigen Material mit steiler Hysteresekurve gebildet sein, während der Transformatorkern aus einem günstigeren Kernmaterial mit flacherer Hysteresekurve gebildet sein kann. Ein Kernmaterial mit steiler Hysteresekurve resultiert nicht nur in einem geringeren Flächeninhalt der Hystereseschleife, woraus sich die geringeren Kernverluste ergeben, sondern ermöglicht auch die Änderung der Induktivität vom mH- in den $\mu$H-Bereich deutlich schneller. Dadurch kann ein schnelleres Umladen der Entladungslampe und damit eine höhere Effizienz der Entladungslampe erreicht werden.

Besonders bevorzugt ist die Spannung-Zeit-Fläche, bei der die diskrete Induktivität in Sättigung geht, kleiner als die Spannung-Zeit-Fläche, bei der der Transformator aufgrund der Spannung an der Sekundärwicklung in Sättigung geht. Durch diese Maßnahme wird sichergestellt, dass der Kern des Transformators, der bevorzugt aus einem im Vergleich zum Induktivitätskern kostengünstigeren Material gefertigt ist, nicht in Sättigung geht. Der Kern der Induktivität geht zwar in Sättigung, ist jedoch aus einem höherwertigen Kernmaterial mit steiler Hysteresekurve gefertigt, so dass in der Gesamtbilanz die Verluste gegenüber dem Stand der Technik reduziert sind.

Bevorzugt sind der Transformator und die diskrete Induktivität derart bemessen, dass nach einem Schließen des mindestens einen elektronischen Schalters des Flusswandlers die diskrete Induktivität eine Sättigung des Transformators zumindest für eine vorgebbare Spannung-Zeit-Fläche der Spannung an der Sekundärwicklung verhindert. Bei geeigneter Auslegung dieser vorgebbaren Spannung-Zeit-Fläche kann sichergestellt werden, dass der Kern des Transformators im Normalbetrieb nicht sättigt, vielmehr alleine der Kern der diskreten Induktivität in Sättigung geht.

Bevorzugt sind der Transformator und die diskrete Induktivität derart bemessen, dass nach dem Schließen des mindestens einen elektronischen Schalters des Flusswandlers und nach einer vorgebbaren Spannung-Zeit-Fläche der Spannung an der Sekundärwicklung die diskrete Induktivität in Sättigung geht, während der Transformator nicht in Sättigung geht. Auch hierdurch wird sichergestellt, dass bei entsprechender Auslegung der vorgebbaren Spannung-Zeit-Fläche der Transformatorkern im Normalbetrieb nicht sättigt.

Weiterhin bevorzugt sind der erste und der zweite Ausgangsanschluss zwischen der Sekundärwicklung und der diskreten Induktivität angeordnet, wobei die Entladungslampe und die diskrete Induktivität in einer an den ersten und den zweiten Ausgangsanschluss anschließbaren Einheit ausgebildet sind. Dadurch lassen sich EMV-Störungen deutlich reduzieren. Dem liegt die Erkenntnis zugrunde, dass ein Großteil der störenden hochfrequenten Signale zwischen der diskreten Induktivität und der Lampe auftreten. Wird demnach der Abstand zwischen diskreter Induktivität und Lampe verkürzt, lassen sich die EMV-Störungen reduzieren.

Bevorzugt ist der mindestens eine elektronische Schalter des Flusswandlers auf eine Betriebsfrequenz zwischen 20 und 100 kHz ausgelegt. Die diskrete Induktivität beträgt ungesättigt bevorzugt zwischen 1 und 400 mH, insbesondere 100 mH. Die diskrete Induktivität beträgt in Sättigung bevorzugt zwischen 5 und 100 $\mu$H, insbesondere 50 $\mu$H. Weiterhin bevorzugt beträgt das Übersetzungsverhältnis des Transformators zwischen 2 und 100, insbesondere 7. In einem bevorzugten Ausführungsbeispiel umfasst die Schaltungsanordnung weiterhin die Entladungslampe, wobei die Entladungslampe beschreibbar ist durch eine Parallelschaltung einer ersten Kapazität zu einer Serienschaltung, die eine zweite Kapazität und einen ohmschen Widerstand umfasst, wobei die charakteristische Frequenz

$$f = \frac{1}{\left(2 * \pi \sqrt{(LC_2)}\right)}$$

kleiner 10 kHz ist, wobei L die ungesättigte diskrete Induktivität und $C_2$ die zweite Kapazität darstellt.

Schließlich ist im Hinblick auf die Kostenreduktion der Kern der diskreten Induktivität bevorzugt aus einem Material mit steilerer Hysteresekurve gefertigt als der Kern des Transformators.

Die mit Bezug auf die erfindungsgemäße Schaltungsanordnung vorgestellten bevorzugten Ausführungsformen und deren Vorteile gelten, soweit anwendbar, entsprechend für das erfindungsgemäße Verfahren.

Kurze Beschreibung der Zeichnung(en)

Im Nachfolgenden wird nunmehr ein Ausführungsbeispiel einer erfindungsgemäßen Schaltungsanordnung unter Bezugnahme auf die beigefügte Zeichnung, die in schematischer Darstellung ein Ausführungsbeispiel einer erfindungsgemäßen Schaltungsanordnung zeigt, beschrieben.

Bevorzugte Ausführung der Erfindung

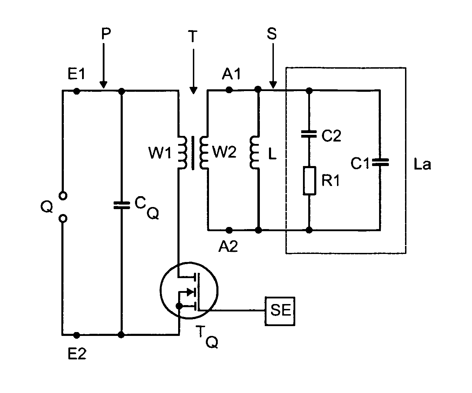

Fig. 1 zeigt in schematischer Darstellung ein Ausführungsbeispiel einer erfindungsgemäßen Schaltungsanordnung. Darin ist zunächst mit La eine Entladungslampe dargestellt, die für dielektrische behinderte Entladungen ausgelegt ist und im Ersatzschaltbild beschrieben werden kann durch einen Kondensator $C_1$, der parallelgeschaltet ist zu einer Serienschaltung, die einen Kondensator $C_2$ und einen ohmschen Widerstand $R_1$ umfasst. Die Entladungslampe La ist in einen Sekundärkreis S geschaltet, der neben der Entladungslampe La eine Sekundärwicklung W2 eines Transformators T sowie eine dazu parallelgeschaltete diskrete Induktivität L enthält. Überdies sind ein erster Ausgangsanschluss A1 und ein zweiter Ausgangsanschluss A2 vorgesehen. Die Primärwicklung W1 des Transformators T liegt in einem Primärkreis P, der aus einer Leistungsversorgung Q mit Leistung für den Transformator T, die Induktivität L und die Entladungslampe La versorgt ist. Die Leistungsversorgung Q ist über einen ersten E1 und einen zweiten Ausgangsanschluss E2 an den Primärkreis gekoppelt.

Ferner liegt in einem der Äste zwischen der Leistungsquelle Q und der Primärwicklung W1 ein schneller Schalter $T_Q$. Dabei handelt es sich um einen Leistungs-MOSFET, der von einer Steuereinrichtung SE geschaltet bzw. gesteuert ist.

Parallel zu der Reihenschaltung aus der Primärwicklung W1 und dem Schalter $T_Q$ liegt ein Speicherkondensator $C_Q$. Dieser Speicherkondensator $C_Q$ wird von der Quelle Q nachgeladen, gehört im Grunde zu der Quelle Q und dient zum Anlegen einer Spannung an die Primärwicklung W1 abhängig von dem Schaltzustand des Schalters $T_Q$. Es handelt sich dabei bevorzugt um keramische Mehrschichtkondensatoren. Durch die Primärwicklung W1 und den Schalter $T_Q$ wird ein Flusswandler gebildet, bei dem zunächst in konventioneller Weise ein Stromfluss durch die Primärwicklung W1 erzeugt wird, wobei das Wicklungsverhältnis des Transformators T so ausgelegt ist, dass der Stromfluss durch die Primärwicklung W1 in der Sekundärwicklung W2 und damit mittelbar an der Entladungslampe La eine Zündspannung induziert. Wird der Schalter $T_Q$ durch die Steuereinrichtung SE geöffnet, so verbleibt im Sekundärkreis S Energie zumindest in Form einer Restmagnetisierung des Transformators T und der Induktivität L.

Aus Fig. 1 ergibt sich direkt, dass zwischen dem Primärkreis P und dem Sekundärkreis S eine vollständige galvanische Trennung vorliegt. Dies ist von erheblichem Sicherheitsvorteil im Hinblick auf die auf der Sekundärkreisseite S vorliegenden hohen Spannungen.

Bei der in Fig. 1 dargestellten Ausführungsform einer erfindungsgemäßen Schaltungsanordnung ist der Kern der diskreten Induktivität L aus einem Material mit steilerer Hysteresekurve gefertigt als der Kern des Transformators T. Überdies ist die Spannung-Zeit-Fläche, bei der die diskrete Induktivität L in Sättigung geht, kleiner als die Spannung-Zeit-Fläche, bei der der Transformator

T aufgrund der Spannung an der Sekundärwicklung W2 in Sättigung geht. Nach einem Schließen des Schalters $T_Q$ des Flusswandlers verhindert damit die diskrete Induktivität L eine Sättigung des Transformators T, zumindest für eine vorgebbare Spannung-Zeit-Fläche der Spannung an der Sekundärwicklung W2 . Insbesondere wird dadurch erreicht, dass zwar die diskrete Induktivität L in Sättigung geht, nicht jedoch der Transformator T.

**[0019]** Wenn L die ungesättigte diskrete Induktivität darstellt, dann lässt sich eine charakteristische Frequenz f berechnen zu

$$f = \frac{1}{\left(2 * \pi \sqrt{(LC_2)}\right)}$$

**[0020]** Vorliegend ist durch geeignete Dimensionierung sichergestellt, dass die Frequenz f kleiner als 10 kHz ist. Durch diese Gleichung kann damit eine Relation für die Größenordnung der diskreten Induktivität L gewonnen werden, abhängig von der Kapazität $C_2$ im Ersatzschaltbild für die Entladungslampe La.

**[0021]** Wenngleich in Fig. 1 eine bestimmte Ausführung eines Flusswandlers dargestellt ist, so lässt sich die vorliegende Erfindung ohne weiteres mit anderen Flusswandlern realisieren.

**[0022]** Bevorzugt ist die diskrete Induktivität L und die Entladungslampe La als Einheit ausgebildet, so dass der Abstand zwischen der Induktivität L und der Entladungslampe La möglichst klein ausgebildet werden kann.

**[0023]** In einem bevorzugten Ausführungsbeispiel ist der Kern der Induktivität L aus Vitroperm der Firma Vacuumschmelze gebildet und zwar als Ringkern mit einem Außendurchmesser von 40 mm, einem Innendurchmesser von 32 mm, einer Höhe von 15 mm sowie 81 Windungen. Die Entladungslampe La wies in dem Ausführungsbeispiel eine Fläche von 0,28 $m^2$ auf. Der Kern des Transformators T bestand aus einem günstigen Ferritmaterial.

**Patentansprüche**

1. Schaltungsanordnung zum Betreiben einer Entladungslampe (La) mit einer dielektrischen Schicht zwischen zumindest einer Elektrode und einem Entladungsmedium mit

    - einem Primärkreis (P), der einen Flusswandler (W1, $T_Q$) mit mindestens einem elektronischen Schalter ($T_Q$) umfasst, wobei der Flusswandler (W1, $T_Q$) einen ersten (E1) und einen zweiten Eingangsanschluss (E2) zum Anschließen einer Eingangsspannung aufweist;
    - einem Sekundärkreis (S), der einen ersten (A1) und einen zweiten Ausgangsanschluss (A2) zum Anschließen der Entladungslampe (La) aufweist; und
    - einen den Primärkreis (P) mit dem Sekundärkreis (S) verbindenden Transformator (T), wobei der Transformator (T) mindestens eine Primärwicklung (W1), eine Sekundärwicklung (W2) und einen Transformatorkern aufweist, auf dem die Primärwicklung (W1) und die Sekundärwicklung (W2) gewickelt sind;

    **dadurch gekennzeichnet,**
    **dass** die Schaltungsanordnung weiterhin eine diskrete Induktivität (L) mit einem Kern umfasst, wobei die diskrete Induktivität (L) elektrisch parallel zur Sekundärwicklung (W2) gekoppelt ist und wobei die Spannung-Zeit-Fläche, bei der die diskrete Induktivität (L) in Sättigung geht, kleiner ist als die Spannung-Zeit-Fläche, bei der der Transformator (T) aufgrund der Spannung an der Sekundärwicklung (W2) in Sättigung geht.

2. Schaltungsanordnung nach Anspruch 1,
    **dadurch gekennzeichnet,**
    **dass** der Transformator (T) und die diskrete Induktivität (L) derart bemessen sind, dass nach einem Schließen des mindestens einen elektronischen Schalters ($T_Q$) des Flusswandlers (W1, $T_Q$) die diskrete Induktivität (L) eine Sättigung des Transformators (T) zumindest für eine vorgebbare Spannung-Zeit-Fläche der Spannung an der Sekundärwicklung (W2) verhindert.

3. Schaltungsanordnung nach Anspruch 2,
    **dadurch gekennzeichnet,**
    **dass** der Transformator (T) und die diskrete Induktivität (L) derart bemessen sind, dass nach dem Schließen des mindestens einen elektronischen Schalters ($T_Q$) des Flusswandlers (W1, $T_Q$) und nach einer vorgebbaren Spannung-Zeit-Fläche der Spannung an der Sekundärwicklung (W2) die diskrete Induktivität (L) in Sättigung geht, während der Transformator (T) nicht in Sättigung geht.

4. Schaltungsanordnung nach einem der vorhergehenden Ansprüche,
    **dadurch gekennzeichnet,**
    **dass** der erste (A1) und der zweite Ausgangsanschluss (A2) zwischen der Sekundärwicklung (W2) und der diskreten Induktivität (L) angeordnet sind, wobei die Entladungslampe (La) und die diskrete Induktivität (L) in einer an den ersten (A1) und den zweiten Ausgangsanschluss (A2) anschließbare Einheit ausgebildet sind.

5. Schaltungsanordnung nach einem der vorhergehenden Ansprüche,
    **dadurch gekennzeichnet,**
    **dass** der mindestens eine elektronische Schalter

(T$_Q$) des Flusswandlers (W1, T$_Q$) auf eine Betriebsfrequenz zwischen 20 und 100 kHz ausgelegt ist.

6. Schaltungsanordnung nach einem der vorhergehenden Ansprüche,
   **dadurch gekennzeichnet,**
   **dass** die diskrete Induktivität (L) ungesättigt zwischen 1 und 400 mH, insbesondere 100 mH, beträgt.

7. Schaltungsanordnung nach einem der vorhergehenden Ansprüche,
   **dadurch gekennzeichnet,**
   **dass** die diskrete Induktivität (L) in Sättigung zwischen 5 und 100 μH, insbesondere 50 μH, beträgt.

8. Schaltungsanordnung nach einem der vorhergehenden Ansprüche,
   **dadurch gekennzeichnet,**
   **dass** das Übersetzungsverhältnis des Transformators (T) zwischen 2 und 100, insbesondere 7, beträgt.

9. Schaltungsanordnung nach einem der vorhergehenden Ansprüche,
   **dadurch gekennzeichnet,**
   **dass** sie weiterhin die Entladungslampe (La) umfasst, wobei die Entladungslampe (La) beschreibbar ist durch eine Parallelschaltung einer ersten Kapazität (C$_1$) zu einer Serienschaltung, die eine zweite Kapazität (C$_2$) und einen ohmschen Widerstand (R$_1$) umfasst, wobei die charakteristische Frequenz

$$f = \frac{1}{\left(2 * \pi \sqrt{(LC_2)}\right)}$$

kleiner 10 kHz ist, wobei L die ungesättigte diskrete Induktivität und C$_2$ die zweite Kapazität (C$_2$) darstellt.

10. Schaltungsanordnung nach einem der vorhergehenden Ansprüche,
    **dadurch gekennzeichnet,**
    **dass** der Kern der diskreten Induktivität (L) aus einem Material mit steilerer Hysterese gefertigt ist als der Kern des Transformators (T).

11. Verfahren zum Betreiben einer Entladungslampe (La) mit einer dielektrischen Schicht zwischen zumindest einer Elektrode und einem Entladungsmedium an einer Schaltungsanordnung mit einem Primärkreis (P), der einen Flusswandler (W1, T$_Q$) mit mindestens einem elektronischen Schalter (T$_Q$) umfasst, wobei der Flusswandler (W1, T$_Q$) einen ersten (E1) und einen zweiten Eingangsanschluss (E2) zum Anschließen einer Eingangsspannung aufweist, einem Sekundärkreis (S), der einen ersten (A1) und einen zweiten Ausgangsanschluss (A2) zum Anschließen der Entladungslampe (La) aufweist, und einem den Primärkreis (P) mit dem Sekundärkreis (S) verbindenden Transformator (T), wobei der Transformator (T) mindestens eine Primärwicklung (W1), eine Sekundärwicklung (W2) und einen Transformatorkern aufweist, auf dem die Primärwicklung (W1) und die Sekundärwicklung (W2) gewickelt sind;
    **gekennzeichnet durch** folgende Schritte:

    a) Schließen des mindestens einen elektronischen Schalters (T$_Q$) des Flusswandlers (W1, T$_Q$) zum Erzeugen einer Spannungsänderung an der Sekundärwicklung (W2) des Transformators (T);
    b) In-Sättigung-Gehen einer diskreten Induktivität (L) mit einem Kern, die elektrisch parallel zur Sekundärwicklung (W2) gekoppelt ist, ohne dass der Transformator (T) in Sättigung geht.

**Claims**

1. Circuit arrangement for operating a discharge lamp (La) with a dielectric layer between at least one electrode and one discharge medium

   - with a primary circuit (P), which comprises a flux converter (W1, T$_Q$) with at least one electronic switch (T$_Q$), the flux converter (W1, T$_Q$) having a first input terminal (E1) and a second input terminal (E2) for connecting an input voltage;
   - with a secondary circuit (S), which has a first output terminal (A1) and a second output terminal (A2) for connecting the discharge lamp (La); and
   - with a transformer (T) connecting the primary circuit (P) to the secondary circuit (S), the transformer (T) having at least a primary winding (W1), a secondary winding (W2) and a transformer core, on which the primary winding (W1) and the secondary winding (W2) are wound;

   **characterized in that** the circuit arrangement furthermore comprises a discrete inductance (L) with a core, the discrete inductance (L) being coupled electrically in parallel with the secondary winding (W2), and the voltage-time integral at which the discrete inductance (L) enters saturation being smaller than the voltage-time integral at which the transformer (T) enters saturation owing to the voltage at the secondary winding (W2).

2. Circuit arrangement according to Claim 1, **characterized in that** the transformer (T) and the discrete inductance (L) are dimensioned in such a way that, once the at least one electronic switch (T$_Q$) of the flux converter (W1, $T_Q$) has closed, the discrete inductance (L) prevents saturation of the transformer (T) at least for a predeterminable voltage-time integral of the voltage across the secondary winding (W2).

3. Circuit arrangement according to Claim 2, **characterized in that** the transformer (T) and the discrete inductance (L) are dimensioned in such a way that, once the at least one electronic switch ($T_Q$) of the flux converter (W1, $T_Q$) has closed and after a predeterminable voltage-time integral of the voltage across the secondary winding (W2), the discrete inductance (L) enters saturation, while the transformer (T) does not enter saturation.

4. Circuit arrangement according to one of the preceding claims, **characterized in that** the first output terminal (A1) and the second output terminal (A2) are arranged between the secondary winding (W2) and the discrete inductance (L), the discharge lamp (La) and the discrete inductance (L) being formed in a unit which can be connected to the first output terminal (A1) and the second output terminal (A2).

5. Circuit arrangement according to one of the preceding claims, **characterized in that** the at least one electronic switch ($T_Q$) of the flux converter (W1, $T_Q$) is designed for an operating frequency of between 20 and 100 kHz.

6. Circuit arrangement according to one of the preceding claims, **characterized in that** the discrete inductance (L), unsaturated, is between 1 and 400 mH, in particular 100 mH.

7. Circuit arrangement according to one of the preceding claims, **characterized in that** the discrete inductance (L), in saturation, is between 5 and 100 $\mu$H, in particular 50 $\mu$H.

8. Circuit arrangement according to one of the preceding claims, **characterized in that** the transformation ratio of the transformer (T) is between 2 and 100, in particular 7.

9. Circuit arrangement according to one of the preceding claims, **characterized in that** it furthermore comprises the discharge lamp (La), it being possible for the discharge lamp (La) to be described by a parallel circuit comprising a first capacitance ($C_1$) and a series circuit, with the series circuit comprising a second capacitance ($C_2$) and a nonreactive resistance ($R_1$), the characteristic frequency

$$f = \frac{1}{\left(2 * \pi \sqrt{(LC_2)}\right)}$$

being lower than 10 kHz, where L represents the unsaturated discrete inductance, and $C_2$ represents the second capacitance.

10. Circuit arrangement according to one of the preceding claims, **characterized in that** the core of the discrete inductance (L) is manufactured from a material with steeper hysteresis than the core of the transformer (T).

11. Method for operating a discharge lamp (La) with a dielectric layer between at least one electrode and one discharge medium using a circuit arrangement with a primary circuit (P), which comprises a flux converter (W1, $T_Q$) with at least one electronic switch ($T_Q$), the flux converter (W1, $T_Q$) having a first input terminal (E1) and a second input terminal (E2) for connecting an input voltage, with a secondary circuit (S), which has a first output terminal (A1) and a second output terminal (A2) for connecting the discharge lamp (La), and with a transformer (T) connecting the primary circuit (P) to the secondary circuit (S), the transformer (T) having at least a primary winding (W1), a secondary winding (W2) and a transformer core, on which the primary winding (W1) and the secondary winding (W2) are wound;
**characterized by** the following steps:

   a) the at least one electronic switch ($T_Q$) of the flux converter (W1, $T_Q$) closing for generating a change in voltage across the secondary winding (W2) of the transformer (T);
   b) a discrete inductance (L) with a core, which inductance is coupled electrically in parallel with the secondary winding (W2), entering saturation without the transformer (T) entering saturation.

## Revendications

1. Montage pour faire fonctionner une lampe ( La ) à décharge, comprenant une couche diélectrique entre une électrode et un fluide de décharge, comprenant

   - un circuit ( P ) primaire, qui comprend un convertisseur ( W1, $T_Q$) de flux ayant au moins un commutateur ( $T_Q$ ) électronique, le convertisseur ( W1, $T_Q$ ) de flux ayant une première borne ( E1 ) d'entrée et une deuxième borne ( E2 ) d'entrée pour l'application d'une tension d'entrée ;
   - un circuit ( S ) secondaire, qui a une première borne ( A1 ) de sortie et une deuxième borne ( A2 ) de sortie pour la connexion de la lampe ( L ) à décharge ; et

- un transformateur ( T ) reliant le circuit ( P ) primaire au circuit ( S ) secondaire, le transformateur ( T ) ayant au moins un enroulement ( W1 ) primaire et un enroulement ( W2 ) secondaire et un noyau de transformateur sur lequel l'enroulement ( W1 ) primaire et l'enroulement ( W2 ) secondaire sont enroulés ;

**caractérisé**

**en ce que** le montage comprend, en outre, une inductance discrète ayant un noyau, l'inductance ( L ) discrète étant montée électriquement en parallèle à l'enroulement ( W2 ) secondaire et dans lequel la surface tension-temps pour laquelle l'inductance ( L ) discrète entre en saturation est plus petite que la surface tension-temps pour laquelle le transformateur ( T ) entre en saturation sur la base de la tension à l'enroulement ( W2 ) secondaire.

2. Montage suivant la revendication 1,
   **caractérisé**
   **en ce que** le transformateur ( T ) et l'inductance ( L ) discrète sont tels qu'après une fermeture du au moins un commutateur ( $T_Q$ ) électronique du convertisseur ( W1, $T_Q$ ) de flux, l'inductance ( L ) discrète empêche une saturation du transformateur ( T ), au moins pour une surface tension-temps, pouvant être prescrite, de la tension à l'enroulement ( W2 ) secondaire.

3. Montage suivant la revendication 2,
   **caractérisé**
   **en ce que** le transformateur ( T ) et l'inductance ( L ) discrète sont tels qu'après la fermeture du au moins un commutateur ( $T_Q$ ) électronique du convertisseur ( W1, $T_Q$ ) de flux et après une surface tension-temps, pouvant être prescrite, de la tension à l'enroulement ( W2 ) secondaire, l'inductance ( L ) discrète entre en saturation, tandis que le transformateur ( T ) n'entre pas en saturation.

4. Montage suivant l'une des revendications précédentes,
   **caractérisé**
   **en ce que** la première borne ( A1 ) de sortie et la deuxième borne ( A2 ) de sortie sont montées entre l'enroulement ( W2 ) secondaire et l'inductance ( L ) discrète, la lampe ( La ) à décharge et l'inductance ( L ) discrète étant constituées en une unité pouvant être raccordée à la première borne ( A1 ) de sortie et à la deuxième borne ( A2 ) de sortie.

5. Montage suivant l'une des revendications précédentes,
   **caractérisé**

**en ce que** le au moins un commutateur ( $T_Q$ ) électronique du convertisseur ( W1, $T_Q$ ) de flux est conçu pour une fréquence de fonctionnement comprise entre 20 et 100 KHz.

6. Montage suivant l'une des revendications précédentes,
   **caractérisé**
   **en ce que** l'inductance ( L ) discrète s'élève insaturée entre 1 et 400 mH, notamment à 100 mH.

7. Montage suivant l'une des revendications précédentes,
   **caractérisé**
   **en ce que** l'inductance ( L ) discrète s'élève à la saturation entre 5 et 100 $\mu$H, notamment à 50 $\mu$H.

8. Montage suivant l'une des revendications précédentes,
   **caractérisé**
   **en ce que** le rapport de transformation du transformateur ( T ) est compris entre 2 et 100, en étant notamment de 7.

9. Montage suivant l'une des revendications précédentes,
   **caractérisé**
   **en ce qu'**il comprend, en outre, la lampe ( La ) à décharge, la lampe ( La ) à décharge pouvant être décrite par un circuit en parallèle d'une première capacité ( $C_1$ ) avec un circuit série, qui comprend une deuxième capacité ( $C_2$ ) et une résistance ( $R_1$ ) ohmique, la fréquence caractéristique

$$ f = \frac{1}{\left(2 * \pi \sqrt{(LC_2)}\right)} $$

étant plus basse que 10 KHz, L étant l'inductance discrète insaturée et $C_2$ la deuxième capacité ( $C_2$ ).

10. Montage suivant l'une des revendications précédentes,
    **caractérisé**
    **en ce que** le noyau de l'inductance ( L ) discrète est en un matériau ayant une hystérésis plus pointue que celle du noyau du transformateur ( T ).

11. Procédé pour faire fonctionner une lampe ( La ) à décharge, comprenant une couche diélectrique entre une électrode et un fluide de décharge, comprenant un circuit ( P ) primaire, qui comprend un convertisseur ( W1, $T_Q$ ) de flux ayant au moins un commutateur ( $T_Q$ ) électronique, le convertisseur ( W1, $T_Q$ ) de flux ayant une première borne ( E1 ) d'entrée et une deuxième borne ( E2 ) d'entrée pour l'application d'une tension d'entrée, un circuit ( S ) secondaire, qui a une première borne ( A1 ) de sortie et une deuxième borne ( A2 ) de sortie pour la connexion de la lampe ( L ) à décharge, et un transformateur ( T ) reliant le circuit ( P ) primaire au circuit ( S ) secondaire, le transformateur ( T ) ayant au moins un enroulement ( W1 ) primaire et un enroulement ( W2 ) secondaire et un noyau de transformateur sur lequel l'enroulement ( W1 ) primaire et l'enroulement ( W2 ) secondaire sont enroulés ; **caractérisé par** les stades suivants :

a) on ferme le au moins un commutateur ( $T_Q$ ) électronique du convertisseur ( W1, $T_Q$ ) de flux pour produire une variation de tension sur l'enroulement ( W2 ) secondaire du transformateur ( T ) ;
b) on fait entrer en saturation une inductance ( L ) discrète ayant un noyau qui est monté électriquement en parallèle à l'enroulement ( W2 ) secondaire sans que le transformateur ( T ) entre en saturation.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 10011484 A1
- DE 19839329 A1